Europäisches Patentamt

European Patent Office

Office européen des brevets

(11) Publication number: **0 021 714**
**B1**

(12) **EUROPEAN PATENT SPECIFICATION**

(45) Date of publication of patent specification: **30.09.87**

(21) Application number: **80301953.8**

(22) Date of filing: **10.06.80**

(51) Int. Cl.⁴: **H 02 M 7/04**

(54) Rectifier power-supply circuits.

(30) Priority: **15.06.79 US 48855**

(43) Date of publication of application:
**07.01.81 Bulletin 81/01**

(45) Publication of the grant of the patent:
**30.09.87 Bulletin 87/40**

(84) Designated Contracting States:
**DE FR GB IT SE**

(56) References cited:
**DE-A-2 746 504**

(73) Proprietor: **SPERRY CORPORATION**
**1290, Avenue of the Americas**
**New York, N.Y. 10019 (US)**

(72) Inventor: **Rokas, Gary James**
**59 First Avenue**
**Lasalle, Quebec H8P-2E4 (CA)**

(74) Representative: **Orchard, Oliver John**
**JOHN ORCHARD & CO. Staple Inn Buildings**
**North High Holborn**
**London WC1V 7PZ (GB)**

Courier Press, Leamington Spa, England.

# 0 021 714

**Description**

The present invention relates to DC power supplies. In one such type of power supply an input rectifier is used to produce a DC bulk voltage from the AC input line. This raw DC bulk voltage is then switched at high frequency by the inverter section and pulse-width-modulated to produce a stable output voltage, independent of line and load variations.

Present designs, in response to computer system demands for "brown-out" capabilities to 66% of nominal line conditions, permit the bulk DC voltage to vary from approximately 170 to 360V DC, when operating from a nominal voltage of 200 to 240V AC. The upper limit of 360V is compatible with the present state of transistor technology incorporating 400V high speed devices. The lower limit, however, presents somewhat of a problem in that the turns ratio of the inverter's high frequency transformer is set by the ratio of low line DC input voltage to the required DC output voltage, assuming the inverter is operating at maximum pulse width. Increasing the input voltage results in decreasing the pulse width. Large voltage variations, therefore, result in the inverter operating at a fraction of its power switch section capability. There is a need for a circuit which will regulate this bulk voltage to a nominal value from 300 to 360V DC for all line-load conditions. It is also desirable that this circuit be efficient and not require a line frequency transformer for its operation.

The invention concerns a rectifier circuit comprising a fullwave diode bridge rectifier with an output capacitor filter. From DE—A—2 746 504, such a circuit is known in which the output filter comprises two capacitors in series and the common point between the capacitors is connected to at least one input terminal of the bridge through a switching means. In the rectifier circuit according to this document the switching means consist of a manually operated switch in order to obtain a d.c. output voltage ("bulk voltage") which remains essentially constant when two different line voltages (e.g. 120V and 220V) are applied to the rectifier circuit. There is a need, however, (e.g. in power supplies for computers) for a rectifier circuit which will regulate the bulk voltage to a constant nominal voltage for all line-load conditions e.g. in case of a power brown-out. This problem is solved in that the switching means consists of a controllable bi-directional current device and that a control circuit switches on the bi-directional device for at least part of each cycle in response to a drop in output voltage, whereby the circuit is caused to function at least partially in each cycle as a voltage doubler rectifier.

The present invention provides a rectifier circuit, which in conjunction with an inverter enables regulation of the bulk DC voltage available to the inverter to within 1% of the design limit when operating in the phase controlled modes of operation. The circuit has the further advantage of having its greatest power factor at high line conditions, unlike conventional phase-controlled circuits which penalize the user for his "brown-out" capabilities by presenting a low power factor under normal line conditions.

The rectifier circuit can operate in four modes, depending on the line-load conditions, which are as follows:

(i) full wave bridge,
(ii) phase controlled bridge-doubler,
(iii) phase controlled doubler, or
(iv) uncontrolled doubler.

As the line voltage decreases with respect to the load voltage on the capacitor filter, the rectifier circuit switches from the bridge mode to the phase controlled bridge-doubler mode, to the phase controlled doubler mode to the uncontrolled doubler mode, depending on the relative difference. Where the line voltage exceeds the load voltage, however, the rectifier circuit is operable in the full wave bridge mode or the bridge-doubler mode if the load has not attained the nominal design value.

Figure 1 is a block diagram of a known type of power supply.

Figure 2 is a block diagram of a switched mode power supply containing the bridge-doubler circuit of the present invention.

Figure 3 is a circuit diagram of a bridge-doubler circuit according to the invention for a single phase AC input.

Figure 4 is a block diagram of the controller circuit for the single phase bridge-doubler circuit of Figure 3.

Figure 5a, b, c, d are representations of the various waveshapes that occur in the single phase controller of Figure 4.

Figures 6a and b are representations of the waveshapes for the phase controlled bridge-doubler mode of operation for Figure 3 assuming no-load conditions.

Figure 7a and b are block diagrams of various loading schemes possible for the bridge-doubler circuit.

Figure 8 is a circuit diagram of a bridge-doubler circuit for a three phase AC input.

Figure 9 is a block diagram of the controller circuit for the three phase bridge-doubler of Figure 8.

Figure 10 is a circuit diagram for one of three sense circuits for ensuring that no two SCR's between phases are conducting at the same time in the bridge-doubler circuit of Figure 8.

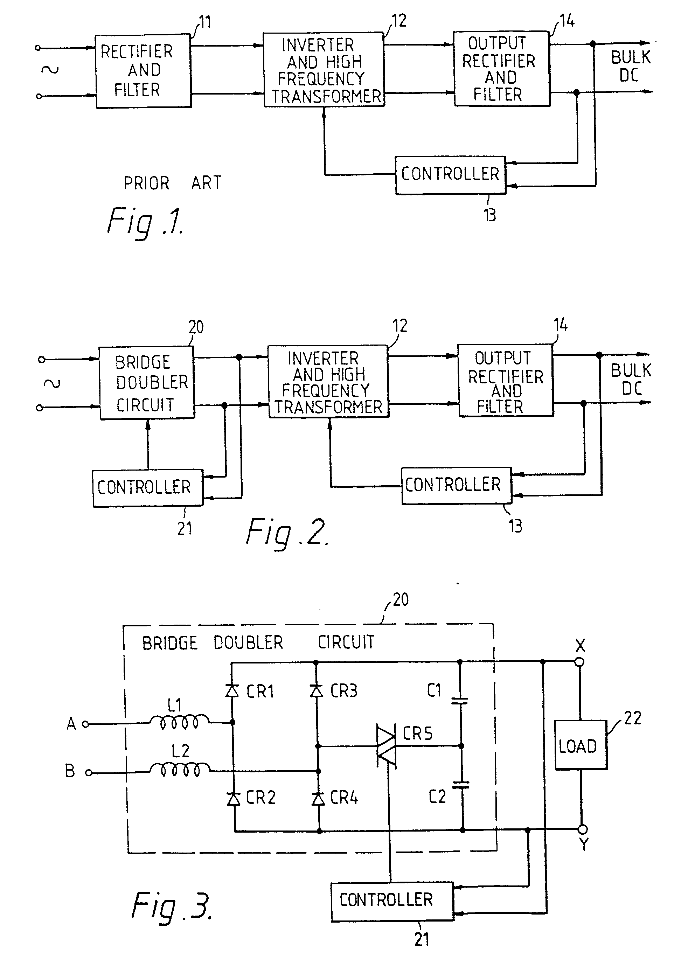

Figure 1 is a block diagram of a known type of power supply. An AC input is full-wave rectified and smoothed by a capacitor in a rectifier and filter circuit 11 and the resultant DC voltage is then switched at

2

high frequency and pulse width modulated by an inverter 12. The pulse width is controlled by a controller 13 to provide a stable output voltage, after rectification by a rectifier 14, which is independent of line and load variations. Such systems, however, do not optimize the transfer of power to the switching transistors of the inverter. While standard phase control circuits are available to pre-regulate the bulk DC voltage to a value from 300 to 360V DC, they have the consequential drawback of requiring a step-up transformer to achieve the nominal 360 volts compatible with present 400V switching transistor inverter designs. Standard phase control circuits have the further drawback in that they have their lowest power factor during high line conditions and thus penalize the user during normal operation for his low line (i.e., brown-out) capabilities.

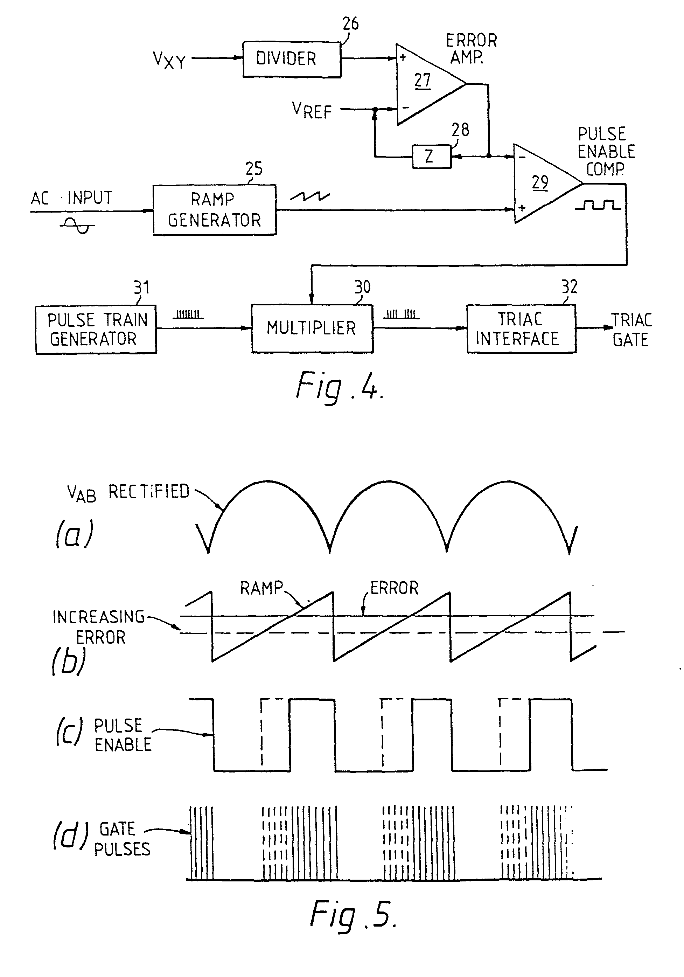

Figure 2 shows a switched-mode power supply having a pre-regulated DC bulk voltage by use of the bridge-doubler circuit 20 of the present invention, controlled by its own controller 21. This circuit obviates the need for a step-up transformer and provides a high power factor during the high line (i.e., normal) operating condition. A bridge-doubler circuit for a single phase, AC input, typically 200/240V (RMS), is shown in Figure 3 and the controller for such a doubler circuit is shown in Figure 4.

Figure 3 is a circuit diagram of the bridge-doubler circuit of the present invention. The circuit comprises two inductors L1, L2, respectively connected one between each of the AC input terminals A and B, and the terminals of a full wave bridge rectifier constituted by four diodes, CR1, CR2, CR3, CR4. Across the output of the bridge rectifier are connected two capacitors C1, C2 in series, and the common point between them is connected by way of a triac CR5 to the junction of CR3 and CR4. The DC output appears across the terminals XY between which a load 22 is connected, which, in the arrangement described with respect to Figure 2, will be the input terminals of the inverter 12. A controller 21 for controlling the operation of the triac CR5 has its inputs connected across the DC terminals XY, and controls the operation of the triac in such a way as to keep the DC output voltage constant. This controller will be described in more detail with respect to Figure 4.

The operation of the bridge-doubler circuit 20 of Figure 3 will now be described as the single-phase AC input varies between its maximum and minimum design values. It is to be recognised, however, that the operation of the doubler circuit for a single phase input is analogous to that for a three phase input, which case will be more fully described hereinafter.

Referring to Figure 3, when a single phase AC voltage $V_{AB}$ is impressed across the inputs A and B, the inductors L1 and L2 limit the rise time of the input current, thereby reducing the RMS current and improving the power factor of the circuit under all conditions.

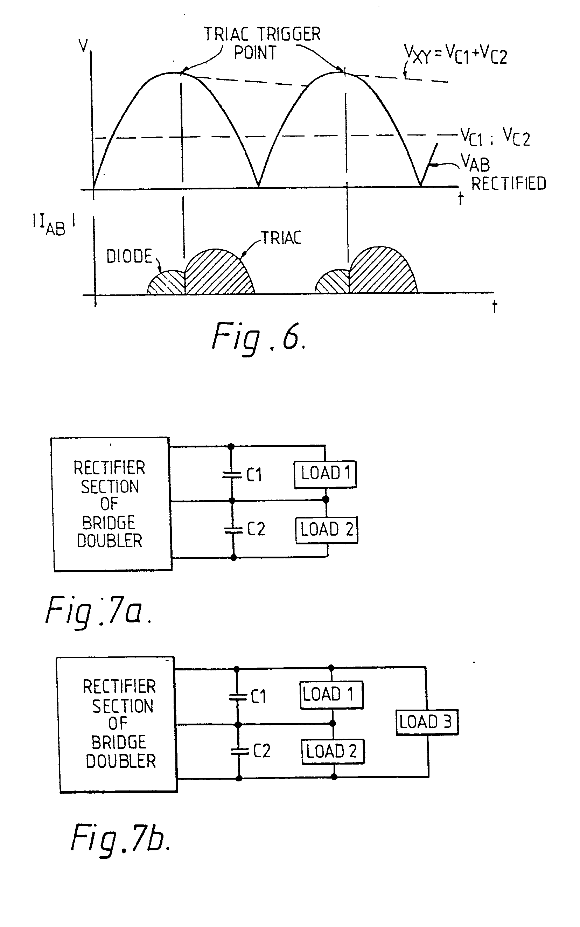

Consider, first, the positive half-cycle of $V_{AB}$, assuming that $V_{AB}=240V$ (RMS), that $V_{AB\ (peak)}>V_{XY}$ so that the normal peak value of $V_{AB}$ in 339.4 volts. Diodes CR1 and CR4 are forward biased and capacitors C1 and C2 charge during the first quarter cycle, and discharge through the load during the second quarter cycle when the diodes are reverse biased. In a similar manner, during the negative half cycle, diodes CR2 and CR3 are forward biased, capacitors C1 and C2 first charge, and then discharge, through the load. The voltage waveshape $V_{XY}$ across X and Y thus appears as a full wave rectified voltage (see Figure 6a). By selecting appropriate values for C1 and C2, the time constant for the load and capacitor combination can be adjusted to be much greater than the period of the AC source so as to minimize the ripple of $V_{XY}$ and produce a relatively constant 300V DC output. Thus, during a normal high line AC input condition, the circuit operates as an unregulated, capacitor-filtered, full-wave bridge, which operation is more specifically described in an article entitled, "Time Domain Analysis of the Power Factor for a Rectifier Filter System with Over/and Subcritical Inductance" by Francise C. Schwartz, IEEE Transactions on Industrial Electronics and Control Instrumentation, Vol. IECI 20, No. 2, May 1973, pp. 61—68.

If the peak AC input voltage decreases due to "brown-out" conditions, the output $V_{XY}$ decreases below the desired DC level, and depending on whether $V_{AB\ (peak)}>V_{XY}$ or $V_{AB\ (peak)}<V_{XY}$, the circuit operates either in a phase-controlled bridge-doubler mode, or in a phase-controlled doubler mode, and if $V_{AB\ (peak)}<1/2\ V_{XY\ (desired)}$, the circuit operates in an uncontrolled doubler mode. In any event, the circuit discontinues operating in the full bridge mode, and triac CR5 is pulsed by the controller.

During any of the three doubler modes of operation, CR5 is controllably pulses "on" to act as a short circuit, and thus during a positive half cycle, CR1 is forward biased and charge flows from A through CR1 to charge C1 and then through CR5 to B. In a similar manner during the negative half cycle, charge flows from B through CR5 to charge C2 and then through C2 to A. The DC output voltage $V_{XY}$ is now the sum of the voltages to which C1 and C2 charge, and will be dependent on the timing of when CR5 is pulsed in relation to $V_{in}$. The ripple component of $V_{XY}$ will also be greater than for the full bridge mode.

Figure 4 is a block diagram of the controller which determines the instant at which CR5 is pulsed during the various doubler modes. This generates control pulses synchronized to the line frequency of $V_{AB}$ and alters the phasing (i.e., exact timing) of these pulses and thus regulates $V_{XY}$ by controlling the charge time of C1 and C2, and therefore the voltages to which they become charged.

Referring to Figures 4 and 5, the controller and its operation will now be described. A ramp generator 25 coupled to the AC input $V_{AB}$ produces a ramp voltage synchronized to $V_{AB}$ but having a fixed slope and peak voltage independent of $V_{AB}$. The output voltage $V_{XY}$ of the bridge-doubler circuit is reduced by a suitable voltage divider 26 to a level compatible with the input of an operational error amplifier 27. The error amplifier then compares the reduced output signal with a constant DC reference voltage $V_{REF}$, which voltage is fixed at a value proportionate to the desired $V_{XY}$, to determine the difference between $V_{REF}$ and the actual output voltage. The amplifier 27 is further feedback-coupled by an appropriate resistance-capacitance combination 28 to stabilize the closed loop response of the system against high frequency ripple or noise which could cause the system to oscillate.

The amplified difference or error signal from the error amplifier is next compared with the ramp voltage by a pulse enable comparator 29 which generates a width-modulated logic pulse (see Figure 5c) used to enable a multiplier 30 coupled to a pulse train generator 31. If the ramp signal is less than the error signal (i.e., high line AC input) a logic low is generated and the multiplier is disabled. The signal from the multiplier is supplied to a triac interface 32 which triggers the triac CR5.

Referring to Figure 5b and 5d, if the ramp signal is greater than the error signal (i.e., low line AC input), a logic high is generated, the multiplier 30 is enabled and a width modulator series of control pulses of a sufficient amplitude to turn CR5 on is produced. The width-modulated gate control pulses are then impressed on the triac interface (i.e., optical or transformer) which isolates the controller from the bridge-doubler circuit and triggers the triac "on" with each successive pulse.

From Figure 5b it can also be seen that as the error signal decreases due to a decreasing $V_{XY}$, the ramp signal intersects the error signal earlier, causing CR5 to be pulsed on for longer, and permitting C1 and C2 to charge to higher voltages, and thus causing the output voltage $V_{XY}$ to rise and offset the voltage drop of $V_{AB}$. The increase in $V_{XY}$ results because C1 and C2 are alternately permitted to charge to values in excess of that to which they would individually charge during the full bridge mode. The peak voltage to which C1 and C2 will charge during the controlled doubler modes is dependent on $V_{REF}$, since the controller enables the trigger pulses so long as an error signal is produced.

Referring to Figures 3 and 6 and assuming the circuit is operating in the phase controlled bridge-doubler mode, where $V_{AB \ (peak)} > V_{XY}$ but $V_{AB \ (peak)} < V_{XY \ (desired)}$ the charge on C1 and C2 for each half cycle will be made up of two components, one due to the operation of the circuit in the bridge mode up to the instant at which CR5 is triggered, and the other due to operation in the doubler mode for the period during which CR5 is pulsed. During the bridge mode, C1 and C2 will charge at the same time to approximately the same value if C1=C2, whereas during the doubler portion of the operation, C1 and C2 charge to a voltage determined by the error signal. From Figure 6b the respective charge components for C1 and C2 can be seen in relation to the input current $I_{AB}$. The charge time of capacitors C1 and C2 determined by the trigger point will thus control the increase in VC1 and VC2 until $VC1 + VC2 = V_{XY \ (desired)}$.

If the circuit is operating in the phase controlled doubler mode, where $V_{AB} < V_{XY}$, the charge on C1 and C2 results only from the doubler component. If, however, $V_{AB}$ decreases to the point where $V_{AB \ (peak)} < 1/2 \ V_{XY \ (desired)}$, CR5 is pulsed on continuously, and the circuit will be uncontrolled until $V_{AB}$ increases to the point where $V_{AB} \geq 1/2 \ V_{XY \ (desired)}$ and the circuit again operates in the phase controlled doubler mode until $V_{AB \ (peak)} > V_{XY}$ when it operates in the phase controlled bridge-doubler mode. This assumes no-load conditions, whereas under load conditions the crossover point occurs for a larger $V_{AB}$.

It should also be noted that the bridge-doubler circuit of the present invention is capable of operating in the centre-tapped, unbalanced load conditions of Figures 7a and 7b. Typically, however, the circuit will be used with a single load across X and Y where the load sees C1 and C2 as one source of current. With the loading arrangements shown, and assuming loads 1 and 2 are equal in size, the current requirements of loads 1 and 2 do not affect the operation of the preferred embodiment in which C1=C2 and $V_{C1}=V_{C2}$. If, however, load 1≠load 2, the control circuit would have to be modified to provide the proper $V_{C1}$ and $V_{C2}$ by adjusting the ramp peak, $V_{REF}$ and control for each half cycle. In this manner, the charge times for C1 and C2 would be individually tailored to the loads.

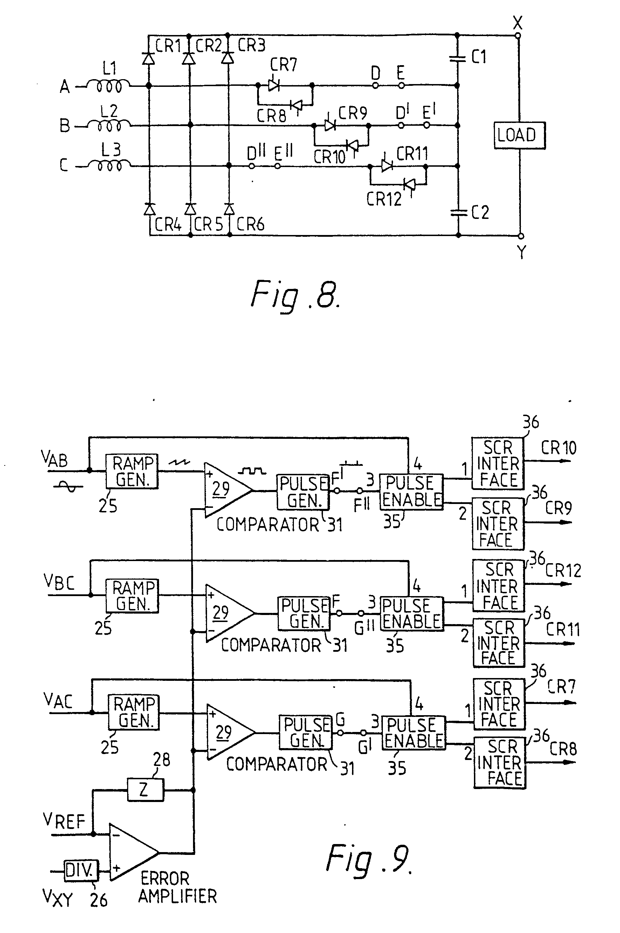

While the operation of the bridge-doubler circuit has been described for the single-phase AC input, the invention is equally applicable to a three-phase AC input. A suitable circuit is shown in Figure 8, in which, instead of using a triac as the control element to switch to the doubler modes of operation, parallel silicon controlled rectifiers (SCR's) are used. Triacs could be used, but given certain phase angles between phases and pulse width conditions, it is possible that the triac could conduct current in the wrong direction in some circumstances. SCR's are therefore used since they are unidirectional devices and, once pulsed "on", the direction of the current flow is fixed.

The operation of the three-phase bridge-doubler is essentially the same as previously described for the single-phase bridge-doubler, but now there are three single-phase circuits operating 120° out of phase with each other and thus the capacitors C1 and C2 are being pulsed three times as frequently as before. A possible conduction sequence for the bridge mode and doubler modes of operation for the alternating inputs $V_{AB}$, $V_{AC}$ and $V_{BC}$ is as follows:

| Input | Bridge mode | Doubler mode | | |
|---|---|---|---|---|
| | Diodes conducting | Diode | SCR | Capacitor |
| AB (positive cycle) | CR1, CR5 | CR1 | CR10 | C1 |
| AC (positive cycle) | CR1, CR6 | CR6 | CR7 | C2 |
| BC (positive cycle) | CR2, CR6 | CR2 | CR12 | C1 |
| AB (negative cycle) | CR2, CR4 | CR4 | CR9 | C2 |
| AC (negative cycle) | CR3, CR4 | CR3 | CR8 | C1 |
| BC (negative cycle) | CR3, CR5 | CR5 | CR11 | C2 |

The controller for the three-phase bridge-doubler circuit is shown in Figure 9 and operates essentially in a similar manner to three single phase controllers, each synchronized to its respective input phase. The controller differs in that a pulse enable gate 35 replaces the multiplier 30 of Figure 4, and is used to transmit the control pulse at node 3 to node 1 if the input on node 4 is positive and to node 2 if the input on node 4 is negative, thus alternately turning on one or the other of the SCR's through to the appropriate SCR interface 36, depending on the phase of the input.

The technique for pulsing the SCR's is also changed slightly, with the pulse enable comparator signal, still representing the time for which the error signal is less than the peak ramp signal, now causing the pulse generator to produce a single pulse output as the leading edge of each pulse enable comparator signal goes high. In this manner, each SCR remains on so long as it is forward biased and has enough holding current. The on condition, therefore, sustains itself for the same period as described for the triac and the width-modulated series of pulses.

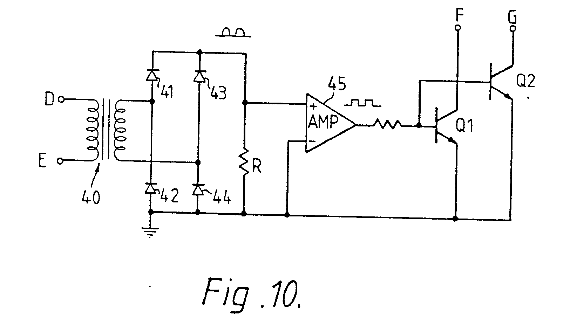

In the three phase circuit it is to be noted that it is desirable to ensure that no two SCR's are on at the same time to avoid the shorting of the input phases. To prevent the shorting of the inputs, a sense circuit is arranged to sense the current through each SCR (using, for example, a current transformer, Hall Effect device or opto-isolator) and to inhibit the control pulses to each of the SCR's, so that only one SCR can conduct at any one time. This can be accomplished with the circuit shown in Figure 10.

Figure 10 shows one of the three circuits for sensing the flow of current through each of the SCR's in the circuit of Figure 8, and inhibiting the control pulses to the other two. Each circuit comprises a current transformer 40 having its primary winding connected between the points D and E of Figure 8, the corresponding points for each of the three circuits being distinguished by primes following the letters. The secondary winding of the transformer feeds into a full wave bridge rectifier constituted by the four diodes 41, 42, 43 and 44, the output from which, across a load resistor R, is applied to an amplifier 45. The amplified output is then supplied to the bases of switching transistors Q1 and Q2, the collectors of which are connected to the correspondingly labelled points F, F' F'' and G, G' G'' of Figure 9.

When current is sensed in the primary winding of the transformer 40 of one of these circuits the switching transistors ground the output of the pulse generator 31 of the other two branches of the circuit of Figure 9, and prevent the corresponding pulse enable circuits 35 from functioning and thereby ensure that neither of the other SCR's is switched on.

**Claims**

1. A rectifier circuit comprising a full wave diode bridge rectifier (CR1, CR2, CR3, CR4, Figure 3—CR1, CR2, CR3, CR4, CR5, CR6, Figure 8) with an output capacitor filter (C1, C2) the output filter comprising two capacitors (C1, C2), in series, and the common point between the capacitors being connected to at least one input terminal of the bridge characterised in that this last connection is through a controllable bi-directional current device (CR5, Figure 3—CR7 CR8, CR9, CR10, CR11, CR12, Figure 8), and a control circuit (21) switches on the bi-directional device for at least part of each cycle in response to a drop in output voltage, whereby the circuit is caused to function at least partially in each cycle as a voltage doubler rectifier.

2. A rectifier circuit according to claim 1 in which each supply input is connected to the bridge rectifier through an inductor (L1, L2, L3).

3. A rectifier circuit according to claim 1 or claim 2 in which the or each control circuit comprises an error amplifier (27) producing an error voltage by comparing a proportion of the output voltage with a reference voltage, a ramp generator (25), a comparator comparing the error voltage with the ramp voltage, and gating means (30 Figure 4, 35 Figure 9) responsive to the result of the latter comparison for gating pulses from a pulse generator (31) to trigger the bi-directional current devices.

4. A rectifier circuit according to any preceding claim arranged for operation from a three-phase supply

5

and including inhibit circuits (Figure 10) responsive to the flow of current in each of the bi-directional devices and arranged thereupon to prevent either of the others being triggered.

5. A circuit according to any preceding claim (20) having its output coupled to an inverter and high frequency transformer (12) and a rectifier and filter (14) to produce a rectified supply stabilised against a drop in input voltage.

## Patentansprüche

1. Gleichrichterschaltung mit einer Zweiweggleichrichter-Diodenbrücke (CR1, CR2, CR3, CR4; Figur 3—CR1, CR2, CR3, CR4, CR5, CR5; Figur 8) und mit einem kapazitiven Ausgangsfilter (C1, C2) aus zwei in Reihe geschalteten Kondensatoren (C1, C2), zwischen denen ein gemeinsamer Anschlußpunkt liegt, mit dem zumindest eine Eingangsklemme der Brücke verbunden ist, dadurch gekennzeichnet, daß diese letzte Verbindung über ein einstellbares, in beiden Richtungen stromführendes Gerät (CR5; Figur 3—CR7 CR8, CR9, CR10, CR11, CR12; Figur 8) verläuft und eine Steuerschaltung (21) dieses Gerät während zumindest eines Teiles jedes Zyklus in Abhängigkeit von einem Abfall der Ausgangsspannung einschaltet, so daß die Schaltung zumindest teilweise in jedem Zyklus als gleichrichtender Spannungsverdoppler zu arbeiten veranlaßt wird.

2. Gleichrichterschaltung gemäß Anspruch 1, bei der alle Eingänge der Stromversorgung über eine Induktivität (L1, L2, L3) mit der Gleichrichterbrücke verbunden sind.

3. Gleichrichterschaltung gemäß Anspruch 1 oder Anspruch 2, bei der die Steuerschaltung(en) einen Fehlerverstärker (27), der bei einem Vergleich eines Anteiles der Ausgangsspannung mit einer Bezugsspannung eine Fehlerspannung erzeugt, einen Rampengenerator (25), einen Komparator, der die Fehlerspannung mit der Rampenspannung vergleicht, und Verknüpfungsschaltungen (30; Figur 4—35; Figur 9) enthält (enthalten), die auf das Vergleichsergebnis ansprechen, um Impulse aus einem Impulsgenerator (31) hindurchzulassen und die in den beiden Richtungen stromführenden Geräte auszulösen.

4. Gleichrichterschaltung gemäß einem vorhergehenden Anspruch, die zum Betrieb mit einer Dreiphasen-Stromversorgung ausgelegt ist und Sperrschaltungen (Figur 10) aufweist, die auf den Stromfluß in jedem der in den beiden Richtungen stromführenden Geräte ansprechen und derart ausgelegt sind, daß die Auslösung jedes anderen Gerätes verhindert wird.

5. Gleichrichterschaltung gemäß einem vorhergehenden Anspruch, an deren Ausgang ein invertierender Hochfrequenz-Transformator (12) und ein Gleichrichter mit Filter (14) angeschlossen sind, um die Zufuhr eines gleichgerichteten Stromes sicherzustellen, der gegen einen Abfall der Eingangsspannung stabilisiert ist.

## Revendications

1. Circuit de redressement comprenant un pont redresseur double-alternance à diodes (CR1, CR2, CR3, CR4, Figure 3—CR1, CR2, CR3, CR4, CR5, CR6, Figure 8) pourvu d'un filtre de sortie capacitif (C1, C2), le filtre de sortie comprenant deux condensateurs (C1, C2) en série, et le point commun entre les condensateurs étant connecté à au moins une borne d'entrée du pont, caractérisé en ce que cette dernière connexion se fait par l'intermédiaire d'un dispositif conducteur de courant bidirectionnel et commandé (CR5, Figure 3—CR7, CR8, CR9, CR10, CR11, CR12, Figure 8), et un circuit de commande (21) rend conducteur le dispositif bidirectionnel pendant au moins une partie de chaque cycle en réponse à une chute de la tension de sortie, ce qui fait que le circuit est amené à agir, au moins partiellement dans chaque cycle, comme un redresseur doubleur de tension.

2. Circuit redresseur selon la revendication 1, dans lequel chaque entrée d'alimentation est connectée au pont redresseur par l'intermédiaire d'une inductance (L1, L2, L3).

3. Circuit redresseur selon la revendication 1 ou la revendication 2, dans lequel le ou chaque circuit de commande comprend un amplificateur d'erreur (27) qui délivre une tension d'erreur en comparant une fraction de la tension de sortie à une tension de référence, un générateur de dents de scie (25), un comparateur comparant la tension d'erreur à la tension en dents de scie, et des moyens d'autorisation de passage (30 Figure 4, 35 Figure 9) sensibles au résultat de cette dernière comparaison pour autoriser le passage d'impulsions délivrées par un générateur d'impulsions (31) en vue du déclenchement des dispositifs conducteurs de courant bidirectionnels.

4. Circuit redresseur selon l'une quelconque des revendications précédentes, conçu pour agir sur une alimentation triphasée et comprenant des circuits inhibiteurs (Figure 10) sensibles au débit de courant dans chaque dispositif bidirectionnel et conçus pour, en fonction de ce débit de courant, empêcher chacun des autres d'être déclenché.

5. Circuit (20) selon l'une quelconque des revendications précédentes, ayant sa sortie reliée à un transformateur inverseur hautefréquence (12) et à un redresseur et filtre (14) pour produire une alimentation redressée et stabilisée vis-à-vis d'une chute de la tension d'entrée.

**Fig .1.**

PRIOR ART

**Fig .2.**

**Fig .3.**

1

Fig.4.

Fig.5.

Fig.6.

Fig.7a.

Fig.7b.

3

Fig .8.

Fig .9.

*Fig .10.*